# FASCICULE DE BREVET EUROPEEN

(11) **EP 0 816 164 B1**
(45) Date de publication et mention de la délivrance du brevet: **17.05.2000**
(21) Numéro de dépôt: 97401461.5
(22) Date de dépôt: 23.06.1997
(51) Int. Cl.: B60N 2/44

(54) **Siège pour véhicule automobile à dossier perfectionné**
Kraftfahrzeugsitz mit verbesserter Rückenlehne
Automotive vehicle seat with improved backrest

(30) Priorité: 28.06.1996 FR 9608124
(43) Date de publication de la demande: 07.01.1998
(73) Titulaire: ECIA - EQUIPEMENTS ET COMPOSANTS POUR L'INDUSTRIE AUTOMOBILE, F-25400 Audincourt (FR)
(72) Inventeur: Harry, Sylvain, 45290 Nogent Sur Vernisson (FR)
(74) Mandataire: Moncheny, Michel

(56) Documents cités:
- EP-A- 0 590 237
- EP-A- 0 689 957
- DE-A- 2 166 822
- FR-A- 2 637 241
- US-A- 4 192 545
- US-A- 4 585 273
- US-A- 5 452 941
- US-A- 5 501 509

## Description

La présente invention concerne un siège pour véhicule automobile à dossier perfectionné.

On connaît déjà dans l'état de la technique un siège pour véhicule automobile, du type comprenant un dossier monté inclinable par rapport à une assise autour d'un axe d'articulation transversal au siège, le dossier étant muni d'une armature métallique en forme générale de U comprenant deux branches latérales reliées à une âme transversale, et du type comprenant un vérin de réglage de l'inclinaison du dossier relié à ce dernier et à l'assise.

US-A-4 585 273 ou FR-A-2 637 241 (FR-A-88 12 904) décrit un siège de ce type muni d'une ceinture de sécurité embarquée comportant trois points d'ancrage portés par le siège.

Ce type de siège est utilisé par exemple dans les véhicules monocorps. Dans ce cas, le siège est généralement accroché de façon amovible dans le véhicule.

L'armature d'un siège à ceinture de sécurité embarquée doit être adaptée pour résister, en cas de choc, aux efforts subis par les points d'ancrage de la ceinture retenant l'occupant du siège.

Il a donc été proposé dans l'état de la technique des armatures de siège, notamment de dossier, renforcées de manière à présenter une résistance mécanique élevée. Toutefois, de telles armatures sont relativement massives si bien qu'elles augmentent notablement le poids des sièges. Ces derniers sont, par conséquent, difficiles à manipuler.

US-A-5 501 509 décrit une armature de dossier en forme générale de cadre portant deux traverses horizontales reliées entre elles par deux montants. Une membrure, s'étendant en diagonale par rapport aux traverses, relie les deux montants.

L'invention a pour but de remédier aux inconvénients ci-dessus et de proposer un siège muni d'une armature en forme générale de U résistante et légère.

A cet effet, l'invention a pour objet un siège pour véhicule automobile, du type précité, caractérisé en ce que l'armature comprend deux ensembles distincts, un premier ensemble, en acier, de forme générale rectiligne, formant une première branche de l'armature, et le second ensemble, en alliage léger moins dense que l'acier, de forme générale coudée, formant la seconde branche et l'âme de l'armature, le vérin étant relié à une extrémité de jonction de la première branche avec l'âme.

Suivant d'autres caractéristiques de l'invention:
- le second ensemble en alliage léger a pour plan de symétrie un plan contenant l'axe d'articulation du dossier si bien que ce second ensemble est réversible de manière à pouvoir équiper indifféremment un siège gauche ou droit ;
- le siège comprend de plus une ceinture de sécurité embarquée, et le second ensemble en alliage léger comprend un renvoi de ceinture comprenant un bossage prolongeant un extrémité de jonction de l'âme avec la première branche de l'armature ;
- le bossage porte un organe de guidage de ceinture, de préférence en matériau synthétique, de forme spécifique à la position du bossage sur la gauche ou sur la droite du siège ;
- l'âme de l'armature comprend au moins un orifice formant logement de réception d'une branche de fixation d'un appui-tête du siège ;
- le logement est muni d'une douille d'adaptation de l'inclinaison de l'appui-tête par rapport au dossier, dans laquelle est emboîtée la branche de l'appui-tête;
- la douille est délimitée par des surfaces interne et externe, de formes générales cylindriques, par exemple circulaire et elliptique respectivement, les sections droites respectives de ces surfaces étant inclinées entre elles, les surfaces interne et externe de la douille étant complémentaire respectivement de la surface externe de la branche de l'appui-tête et de la surface interne du logement de réception de cette branche;
- l'âme de l'armature comprend une paire d'orifices, espacés le long de cette âme, formant des logements de réception d'une paire de branches de fixation d'un appui-tête du siège ;
- le premier ensemble en acier comprend un élément de forme générale tubulaire délimitant la première branche de l'armature ;
- le premier ensemble en acier comprend de plus une ferrure en acier délimitant l'extrémité de jonction de la première branche avec l'âme de l'armature, le vérin étant relié à cette ferrure ;
- le second ensemble est fabriqué dans un matériau choisi parmi les alliages à base d'aluminium.

L'invention sera mieux comprise à la lecture de la description qui va suivre donnée uniquement à titre d'exemple et faite en se référant aux dessins annexés dans lesquels :
- la figure 1 est une vue en perspective d'un siège pour véhicule automobile selon l'invention ;
- la figure 2 est une vue en perspective de l'armature du dossier du siège représenté à la figure 1;
- la figure 3 est une vue de détail de la figure 2 montrant le renvoi de ceinture de sécurité ;
- la figure 4 est une vue suivant la flèche 4 de la figure 3 avec une coupe de l'organe de guidage de ceinture ;
- la figure 5 est une vue en coupe suivant la ligne 5-5 de la figure 3.

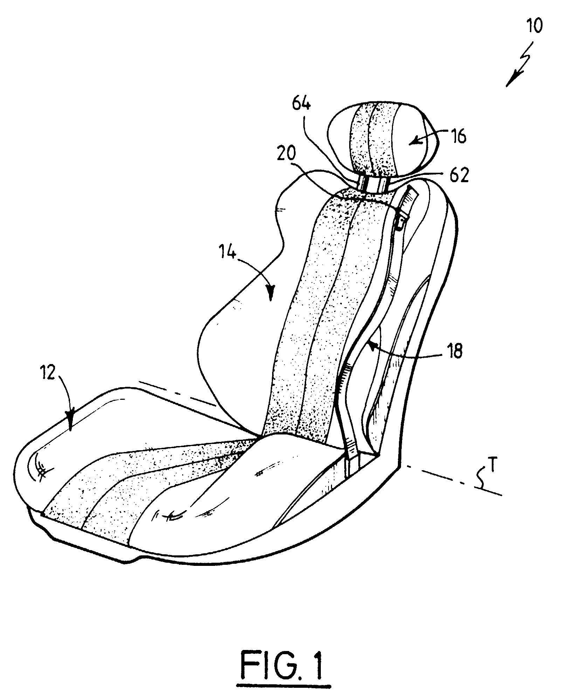

On a représenté sur la figure 1 un siège pour véhicule automobile selon l'invention, désigné par la référence générale 10. Ce siège est destiné, par exemple, à être installé dans un véhicule de type monocorps.

De façon classique, le siège 10 comprend une assise 12 et un dossier 14 surmonté d'un appui-tête 16.

Le dossier 14 est monté inclinable par rapport à l'assise 12 autour d'un axe d'articulation T transversal au siège.

Le siège 10 comprend également une ceinture de sécurité 18 embarquée munie de trois points d'ancrage portés par le siège.

Dans ce qui suit, les orientations avant, arrière, gauche et droite correspondent aux orientations habituelles d'un occupant du siège 10.

Le siège 10 est dit gauche du fait notamment que deux premiers points d'ancrage de la ceinture 18 sont disposés du côté gauche du siège et que le troisième point d'ancrage de cette ceinture est disposé du côté droit de ce siège. Ce dernier point d'ancrage est matérialisé par un pédoncule d'une boucle de la ceinture, non représenté sur les figures, destiné à coopérer, pour l'accrochage de la ceinture, avec un organe complémentaire 20 de la boucle porté par cette ceinture.

Dans un siège droit, les points d'ancrage de la ceinture sont inversés entre les côtés gauche et droit du siège par rapport à l'exemple illustré.

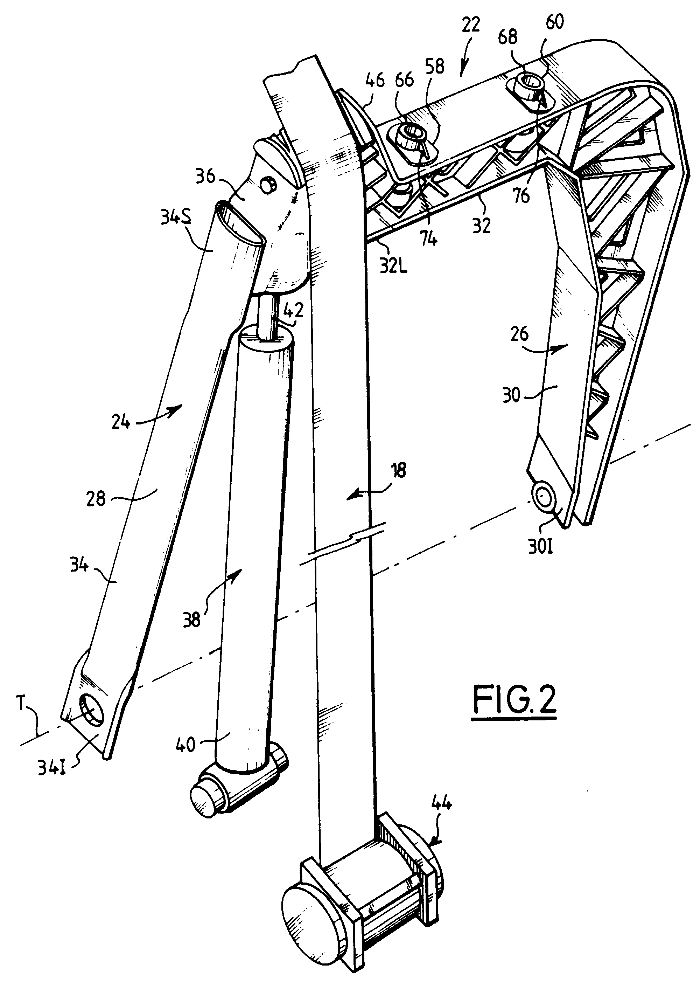

Le dossier 14 est muni d'une armature métallique 22 qui est représentée en détail sur les figures 2 à 4.

Cette armature 22 a une forme générale en U et comporte deux ensembles distincts 24,26.

Un premier ensemble 24, en acier, a une forme générale rectiligne et forme une première branche 28 de l'armature.

Le second ensemble 26, en alliage léger moins dense que l'acier, a une forme générale coudée et forme une seconde branche 30 et une âme transversale 32 reliant les deux branches 28,30 de l'armature.

L'âme 32 délimite la partie supérieure de l'armature 22, les extrémités libres des branches 28,30 étant dirigées vers la partie inférieure du siège.

De préférence, le second ensemble 26 est fabriqué dans un matériau choisi parmi les alliages à base d'aluminium, par exemple par moulage.

Le premier ensemble 24 comprend un élément 34 de forme générale tubulaire muni d'une extrémité inférieure 34I, formant palier pour des moyens d'articulation matérialisant l'axe T, et d'une extrémité supérieure 34S fixée de façon connue en soi, par soudage ou boulonnage, sur une ferrure 36.

L'élément tubulaire 34 et la ferrure 36 sont en acier et délimitent, respectivement, la première branche 28 de l'armature et une extrémité de jonction de cette première branche 28 avec l'âme 32 de l'armature.

Un vérin 38 de réglage de l'inclinaison du dossier relie l'assise au premier ensemble 24 de l'armature. Ce vérin comporte un corps 40 et une tige 42 articulés de façon connue en soi, respectivement, sur l'assise et sur la ferrure 36.

L'extrémité libre inférieure 30I de la seconde branche 30 de l'armature forme un palier pour des moyens d'articulation matérialisant l'axe T.

L'âme 32 est munie d'une extrémité libre 32L de jonction avec la première branche 28 de l'armature. Cette extrémité de jonction 32L est reliée à la ferrure 36, de façon connue en soi, par exemple par boulonnage.

Comme on peut le voir sur la figure 2, la ceinture de sécurité 18 s'étend depuis un enrouleur 44 inférieur, porté par l'assise, jusqu'à un renvoi supérieur comprenant un bossage 46 prolongeant l'extrémité 32L de l'âme.

Le second ensemble 26 a pour plan de symétrie un plan contenant l'axe T d'articulation du dossier. De cette façon, ce second ensemble 26 est réversible de manière à pouvoir équiper indifféremment un siège gauche ou droit. En effet, ce second ensemble 26 peut former aussi bien la branche droite 30 de l'armature de dossier d'un siège gauche, comme cela est représenté sur les figures, que la branche gauche de l'armature de dossier d'un siège droit, le renvoi de ceinture étant sur la gauche du siège dans le premier cas et sur la droite du siège dans le second cas.

Afin de tenir compte des différences d'orientation du brin thoracique de la ceinture 18 sur des sièges gauche et droit, le bossage 46 porte un organe 48 de guidage de la ceinture présentant une forme spécifique à la position du bossage 46 sur la gauche ou sur la droite du siège.

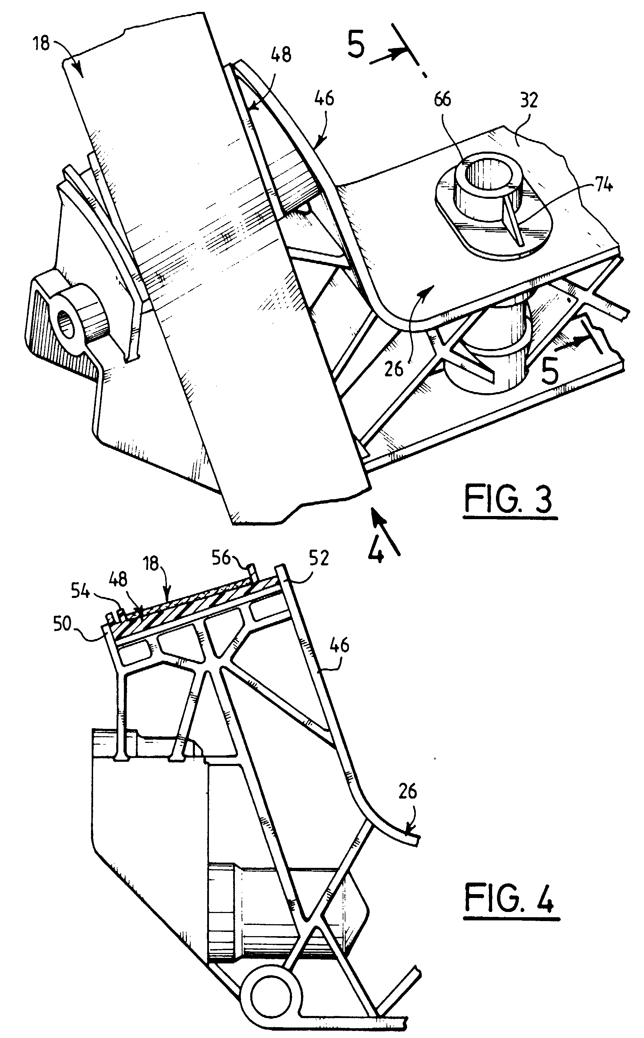

Cet organe de guidage 48, représenté plus en détail sur les figures 3 et 4, est de préférence en matériau synthétique.

Le bossage 46 comporte deux rebords 50,52 de positionnement de l'organe de guidage 48. Ce dernier comporte deux lèvres saillantes 54,56 de guidage de la ceinture 18, coopérant avec les bords de cette dernière.

Les rebords 50,52 s'étendent sensiblement suivant une direction longitudinale du siège, les lèvres 54,56 de guidage étant inclinées de la gauche vers la droite par rapport à cette direction.

En se référant à nouveau à la figure 2, on voit que l'âme 32 de l'armature comprend une paire d'orifices identiques, espacés le long de cette âme, formant des logements 58,60 de réception d'une paire de branches 62,64 de fixation de l'appui-tête 16.

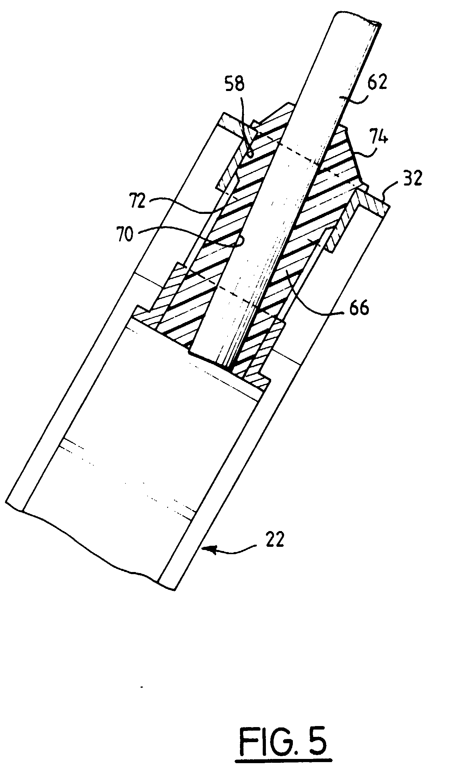

Comme on peut le voir plus clairement sur la figure 5, chaque logement de réception est muni d'une douille 66,68 d'adaptation de l'inclinaison de l'appui-tête 16 par rapport au dossier 14, dans laquelle est emboîtée la branche 62,64 correspondante. Les deux douilles 66,68 sont identiques.

Chaque douille 66,68 est délimitée par des surfaces interne 70 et externe 72, de formes générales cylindriques, de manière que les sections droites respectives de ces surfaces soient inclinées entre elles.

Les surfaces interne 70 et externe 72 des douilles sont complémentaires respectivement de la surface externe des branches 62 de l'appui-tête et de la surface interne des logements de réception 58,60.

Dans l'exemple illustré, les surfaces interne 70 et externe 72 d'une douille sont respectivement cylindrique circulaire et cylindrique elliptique. L'axe de la surface interne 70 est incliné vers l'avant du siège par rapport à la section droite de la surface externe 72, cette section droite étant allongée parallèlement à la direction longitudinale du siège.

De préférence, les douilles 66,68 sont munies d'extrémités faisant saillie à l'extérieur des logements 58,60, comportant des nervures 74,76 d'orientation. Ces nervures permettent de repérer l'orientation correcte des douilles par rapport à leur logement pour obtenir l'inclinaison requise de l'appui-tête par rapport au dossier.

Dans l'exemple illustré, les douilles 66,68 sont convenablement orientées par rapport à leur logement lorsque les nervures 74,76 s'étendent à l'arrière de ces logements.

En variante, l'âme 32 de l'armature peut comprendre un seul orifice formant logement de réception d'une branche unique de fixation de l'appui-tête.

L'invention comporte de nombreux avantages.

Le premier ensemble en acier, relié au vérin de réglage d'inclinaison du dossier, supporte les efforts mécaniques les plus importants auxquels est soumis le siège. En effet, ce premier ensemble en acier supporte l'effort transmis par le vérin de réglage d'inclinaison, les efforts transmis par des bagages en cas de choc et une grande partie des efforts auxquels est soumis le bossage de renvoi de ceinture agencé à la jonction du second ensemble en alliage léger avec ce premier ensemble en acier.

Le second ensemble en alliage léger supporte des efforts plus réduits, en particulier les efforts exercés sur le dossier par le dos et la tête de l'occupant du siège. Ce second ensemble peut donc être fabriqué en utilisant relativement peu de matière première.

Par ailleurs, le second ensemble en alliage léger est réversible de manière à pouvoir équiper indifféremment un siège gauche ou droit, ce qui permet de minimiser le coût de fabrication des sièges d'un véhicule en réduisant les éléments spécifiques au caractère gauche ou droit d'un siège.

L'armature de dossier selon l'invention est donc résistante, légère, peu volumineuse, simple à fabriquer et d'un faible coût de revient.

## Revendications

1. Siège pour véhicule automobile, du type comprenant un dossier (14) monté inclinable par rapport à une assise (12) autour d'un axe d'articulation (T) transversal au siège, le dossier (14) étant muni d'une armature métallique (22) en forme générale de U comprenant deux branches latérales (28,30) reliées à une âme transversale (32), et du type comprenant un vérin (38) de réglage de l'inclinaison du dossier (14) relié à ce dernier et à l'assise (12), caractérisé en ce que l'armature (22) comprend deux ensembles distincts (24,26), un premier ensemble (24), en acier, de forme générale rectiligne, formant une première branche (28) de l'armature, et le second ensemble (26), en alliage léger moins dense que l'acier, de forme générale coudée, formant la seconde branche (30) et l'âme (32) de l'armature, le vérin (38) étant relié à une extrémité de jonction de la première branche (28) avec l'âme (32).

2. Siège selon la revendication 1, caractérisé en ce que le second ensemble (26) en alliage léger a pour plan de symétrie un plan contenant l'axe d'articulation (T) du dossier si bien que ce second ensemble (26) est réversible de manière à pouvoir équiper indifféremment un siège gauche ou droit.

3. Siège selon la revendication 1 ou 2, caractérisé en ce qu'il comprend de plus une ceinture de sécurité (18) embarquée, et en ce que le second ensemble (26) en alliage léger comprend un renvoi de ceinture comprenant un bossage (46) prolongeant un extrémité de jonction de l'âme (32) avec la première branche (28) de l'armature.

4. Siège selon la revendication 3, caractérisé en ce que le bossage (46) porte un organe (48) de guidage de ceinture, de préférence en matériau synthétique, de forme spécifique à la position du bossage (46) sur la gauche ou sur la droite du siège.

5. Siège selon l'une quelconque des revendications précédentes, caractérisé en ce que l'âme (32) de l'armature comprend au moins un orifice formant logement (58,60) de réception d'une branche (62,64) de fixation d'un appui-tête (16) du siège.

6. Siège selon la revendication 5, caractérisé en ce que le logement (58,60) est muni d'une douille (66,68) d'adaptation de l'inclinaison de l'appui-tête (16) par rapport au dossier (14), dans laquelle est emboîtée la branche (62,64) de l'appui-tête.

7. Siège selon la revendication 6, caractérisé en ce que la douille (66,68) est délimitée par des surfaces interne (70) et externe (72), de formes générales cylindriques, par exemple circulaire et elliptique respectivement, les sections droites respectives de ces surfaces (70,72) étant inclinées entre elles, les surfaces interne (70) et externe (72) de la douille étant complémentaire respectivement de la surface externe de la branche (62,64) de l'appui-tête et de la surface interne du logement (58,60) de réception de cette branche.

8. Siège selon l'une quelconque des revendications 5 à 7, caractérisé en ce que l'âme (32) de l'armature comprend une paire d'orifices, espacés le long de cette âme, formant des logements (58,60) de réception d'une paire de branches (62,64) de fixation d'un appui-tête (16) du siège.

9. Siège selon l'une quelconque des revendications précédentes, caractérisé en ce que le premier ensemble (24) en acier comprend un élément (34) de forme générale tubulaire délimitant la première branche de l'armature.

10. Siège selon la revendication 9, caractérisé en ce que le premier ensemble (24) en acier comprend de plus une ferrure (36) en acier délimitant l'extrémité de jonction de la première branche (28) avec l'âme (32) de l'armature, le vérin (38) étant relié à cette ferrure (36).

11. Siège selon l'une quelconque des revendications précédentes, caractérisé en ce que le second ensemble (26) est fabriqué dans un matériau choisi parmi les alliages à base d'aluminium.

## Patentansprüche

1. Kraftfahrzeugsitz mit einer Rückenlehne (14), die um eine quer zum Sitz angeordnete Gelenkachse (T) bezüglich eines Sitzkissens (12) neigbar montiert ist und mit einem allgemein U-förmigen Metallskelett (22) versehen ist, das zwei seitliche, mit einem Quersteg (32) verbundene Schenkel (28, 30) aufweist, und mit einem Zylinder (38) zur Einstellung der Neigung der Rückenlehne(14), der mit dieser und mit dem Sitzkissen (12) verbunden ist, dadurch gekennzeichnet, daß das Skelett (22) aus zwei getrennten Einheiten (24, 26) besteht, und zwar einer ersten Einheit (24) aus Stahl von allgemein geradliniger Form, die einen ersten Schenkel (28) des Skeletts bildet, und einer zweiten Einheit (26) aus Leichtmetallegierung, die weniger dicht als Stahl ist, von allgemein gebogener Form, die den zweiten Schenkel (30) und den Steg (32) des Skeletts bildet, wobei der Zylinder (38) mit einem den ersten Schenkel (28) mit dem Steg (32) verbindenden Ende verbunden ist.

2. Sitz nach Anspruch 1, dadurch gekennzeichnet, daß die zweite Einheit (26) aus Leichtmetallegierung eine die Gelenkachse (T) der Rückenlehne enthaltende Ebene zur Symmetrieebene hat, so daß die zweite Einheit (26) umkehrbar ist und beliebig einen linken oder einen rechten Sitz bestücken kann.

3. Sitz nach Anspruch 1 oder 2, dadurch gekennzeichnet, daß er außerdem einen integrierten Sicherheitsgurt (18) aufweist und daß die zweite Einheit (26) aus Leichtmetallegierung ein Gurtumlenkorgan aufweist, das eine Erhebung (46) umfaßt, die ein den Steg (32) mit dem ersten Schenkel (28) des Skeletts verbindendes Ende verlängert.

4. Sitz nach Anspruch 3, dadurch gekennzeichnet, daß die Erhebung (46) ein Gurtführungsorgan (48) vorzugsweise aus Kunststoff trägt, das eine für die Stellung der Erhebung (46) auf der linken oder auf der rechten Seite des Sitzes spezifische Form hat.

5. Sitz nach einem der vorhergehenden Ansprüche, dadurch gekennzeichnet, daß der Steg (32) des Skeletts mindestens eine Öffnung aufweist, die eine Aussparung (58, 60) zur Aufnahme eines Befestigungsarms (62, 64) einer Kopfstütze (16) des Sitzes bildet.

6. Sitz nach Anspruch 5, dadurch gekennzeichnet, daß die Aussparung (58, 60) mit einer Buchse (66, 68) versehen ist, die zur Anpassung der Neigung der Kopfstütze (16) bezüglich der Rückenlehne (14) dient und in die der Arm (62, 64) der Kopfstütze eingesteckt ist.

7. Sitz nach Anspruch 6, dadurch gekennzeichnet, daß die Buchse (66, 68) durch eine Innenfläche (70) und eine Außenfläche (72) mit allgemein zylindrischen Formen, beispielsweise mit Kreisform bzw. Ellipsenform, abgegrenzt ist, wobei die Querschnitte dieser Flächen (70, 72) gegeneinander geneigt sind, wobei die Innenfläche (70) und die Außenfläche (72) der Buchse zur Außenfläche des Arms (62, 64) der Kopfstütze bzw. zur Innenfläche der Aussparung (58, 60) zur Aufnahme dieses Arms komplementär sind.

8. Sitz nach einem der Ansprüche 5 bis 7, dadurch gekennzeichnet, daß der Steg (32) des Skeletts ein Paar von Öffnungen aufweist, die auf diesem Steg in einem Abstand angeordnet sind und Aussparungen (58, 60) zur Aufnahme eines Paares von Befestigungsarmen (62, 64) einer Kopfstütze (16) des Sitzes bilden.

9. Sitz nach einem der vorhergehenden Ansprüche, dadurch gekennzeichnet, daß die erste Einheit (24) aus Stahl ein allgemein rohrförmiges Element (34) umfaßt, das den ersten Schenkel des Skeletts bildet.

10. Sitz nach Anspruch 9, dadurch gekennzeichnet, daß die erste Einheit (24) aus Stahl außerdem ein Montageteil (36) aus Stahl umfaßt, das das den ersten Schenkel (28) mit dem Steg (32) des Skeletts verbindende Ende bildet, wobei der Zylinder (38) mit diesem Montageteil (36) verbunden ist.

11. Sitz nach einem der vorhergehenden Ansprüche, dadurch gekennzeichnet, daß die zweite Einheit (26) aus einem Werkstoff hergestellt ist, der aus den Legierungen auf Aluminiumbasis ausgewählt ist.

## Claims

1. A seat for a motor vehicle, of the type comprising a back (14) inclinably mounted in relation to a seat (12) around an axis of articulation (T) transverse to the seat, the back (14) being fitted with a metallic frame which is generally U-shaped and comprises two lateral struts (28,30) connected to a transverse base (32) and of the type which comprises a jack (38) which regulates the inclination of the seat-back (14) and is connected to the back and to the seat (12)
characterised in that
the frame (22) comprises two distinct arrangements (24,26), a first arrangement (24), in steel, of substantially rectilinear form which comprises a first strut (28) of the frame; and a second arrangement (26), of a light alloy less dense than the first, of substantially angled form, which comprises the second strut (30) and the base (32) of the frame, the jack (38) being connected at an end to the junction of the first strut (28) with the base (32).

2. A seat according to claim 1, characterised in that the second arrangement (26), in a light alloy has for a plane of symmetry a plane cutting the axis of articulation (T) of the back; and the second arrangement (26) is reversible in that it can be mounted equally well on a left or right seat.

3. A seat according to claim 1 or 2, characterised in that it further comprises a seat belt (18) and in that the second arrangement (26) in a light alloy comprises a belt return mechanism comprising a boss (46) extending at an end to the junction of the base (32) with the first strut (28) of the frame.

4. A seat according to claim 3, characterised in that the boss (46) has a means (48) for guiding the belt, preferably made from a synthetic material, which is specifically formed for the position of the boss (46) on the left or the right of the seat.

5. A seat according to any preceding claim, characterised in that the base (32) of the frame comprises at least one opening (58,60) formed to receive a strut (62,64) which fixes on a head rest (16) of the seat.

6. A seat according to claim 5, characterised in that the housing (58,60) is mounted on a carriage (66,68) which adapts the inclination of the head rest (16) with respect to the back (14) and in which the strut (62,64) of the head rest is encased.

7. A seat according to claim 6, characterised in that the carriage (66,68) is defined through its internal (70) and external (72) surfaces, being of generally cylindrical form, for example circular and elliptic respectively, the respective right sections being inclined in relation to themselves, the internal (70) and external (72) of the carriage being complementary respectively to the external surface of the strut (62,64) of the head rest and the internal surface of the housing (58,60) for receiving the strut.

8. A seat according to any of claims 5 to 7, characterised in that the base of the frame comprises a pair of openings spaced along the length of the base (32) formed of housings (58,60) for receiving a pair of struts (62,64) for fixing the head rest (16) to the seat.

9. A seat according to any preceding claim, characterised in that the first arrangement (24) in steel comprises an element (34) of substantially tubular form defining the first strut of the frame.

10. A seat according to claim 9, characterised in that the first arrangement (24) in steel further comprises a hinge (36) in steel defining the end of the junction of the first strut (28) with the base (32) of the frame, the jack (38) being connected to this hinge (36).

11. A seat according to any preceding claim, characterised in that the second arrangement (26) is made from an aluminium alloy.
